# EUROPÄISCHE PATENTSCHRIFT

(11) **EP 0 999 098 B1**
(45) Veröffentlichungstag und Bekanntmachung des Hinweises auf die Patenterteilung: **11.02.2004**
(21) Anmeldenummer: 99121199.6
(22) Anmeldetag: 23.10.1999
(51) Int. Cl.: B60R 16/02, B60N 3/06

(54) **Kraftfahrzeug mit einem Sicherungskasten**
Motor vehicle with fuse box
Véhicule automobile avec boîte à fusibles

(30) Priorität: 04.11.1998 DE 19850794
(43) Veröffentlichungstag der Anmeldung: 10.05.2000
(73) Patentinhaber: ADAM OPEL AG, 65423 Rüsselsheim (DE)
(72) Erfinder: Frank, Leopold, Dipl.-Designer, 65195 Wiesbaden (DE)
(74) Vertreter: Kümpfel, Heinz, Dipl.-Ing.

(56) Entgegenhaltungen:
- EP-A- 0 857 618
- US-A- 4 991 900
- US-A- 5 785 532

## Beschreibung

Die Erfindung bezieht sich auf ein Kraftfahrzeug mit den im Oberbegriff des Patentanspruchs 1 angegebenen Merkmalen, wie es beispielsweise aus der DE 38 33 499 C2 bekannt ist. Bei beiden Lösungen sind Sicherungen der elektrischen Anlage des Fahrzeuges in einem Sicherungskasten vom Fahrgastraum aus zugänglich angeordnet, wobei die Sicherungen insbesondere in einem Handschuhfach untergebracht sind. Dies verringert die Größe des verbleibenden Handschuhfachs, oder vergrößert den für eine Armaturentafel notwendigen Bauraum. Von Vorteil ist die gute Erreichbarkeit der Sicherungen im Gegensatz zu Lösungen, wo der Sicherungskasten beispielsweise nur von einem Motorraum aus zugänglich ist (Beispiel: EP 02 48 181 B1).

Mit dem Sicherungskasten elektrisch zu verbinden sind sowohl im Motorraum, als auch im Fahrgastraum angeordnete Komponenten der elektrischen Anlage. Die Kabelzuführung zu im Armaturentafelbereich angeordneten Sicherungen ist aufwendig.

Der Erfindung liegt die Aufgabe zugrunde, ein Kraftfahrzeug zu schaffen, dessen Sicherungskasten optimiert angeordnet ist, wobei neben einer komfortfördernden Anordnung auch Vorteile gegenüber bekannten Lösungen bei der Kabelsatzverlegung im Kraftfahrzeug erreicht werden sollen.

Zur Lösung dieser Aufgabe zeichnet sich die Erfindung durch die im Patentanspruch 1 angegebenen Merkmalen aus. Weitere Einzelheiten der Erfindung ergeben sich aus den Patentansprüchen 2 bis 9.

Der Sicherungskasten wird im Beifahrerfußraum angeordnet und eine ein Gehäuse des Sicherungskastens bildende Abdeckkappe wird als Fußstütze ausgebildet. Im Fußraum des Beifahrers ist der für die Sicherungen benötigte Platz vorhanden und gleichzeitig ergibt sich so die Möglichkeit der optimierten Fußraumgestaltung. Die Abdeckkappe kann als komfortable Fußauflage und gleichzeitig als Deformationselement im Crashfall dienen. Sie wird in Leichtbauweise derart gefertigt, daß seitlich auf das Fahrzeug wirkende Kräfte (Seitencrash) aufgenommen werden können und in Fahrtrichtung wirkende Kräfte zu einer gezielten Deformation führen. So kann das Risiko von Beinverletzungen für den Beifahrer gemindert werden.

Auf der Abdeckkappe kann eine Fußmatte befestigt werden oder die Kappe kann integraler Bestandteil der Matte sein.

Durch die Anordnung des Sicherungskastens im Fußraum, in unmittelbarer Nachbarschaft zu einer Trennwand zwischen Motor und Fahrgastraum wird eine Reihe von Vorteilen bei der Kraftfahrzeugmontage erreicht. Der Sicherungskasten (ohne Abdeckkappe) kann integraler Bestandteil eines Kabelsatzes sein, so daß zumindest eine aufwendige Steckverbindung eingespart wird. Ein weiterer, vom Motorraum aus kommender Kabelsatz, kann unmittelbar mit dem Sicherungskasten verbunden werden, ohne daß eine separate Steckverbindung im Trennwandbereich geschaffen werden muß. Dies wird wegen der räumlichen Nähe zur Trennwand und dadurch möglich, daß die Abdeckkappe eine zusätzliche Abschottung zum Motorraum bildet. An eine Kabeldurchführung zum Motorraum sind deswegen nicht so hohe Dichtheitsanforderungen zu stellen.

Je nach den bestehenden räumlichen Verhältnissen im Beifahrer-Fußraum können unterhalb der Abdeckkappe neben den Sicherungen noch weitere Komponenten der elektrischen Anlage des Fahrzeugs angeordnet werden. Beispielsweise können ein CD-Abspielgerät eines Navigationssystems oder auch Steuergeräte dort sehr vorteilhaft angeordnet werden. Da der Zugang zu diesem Gerät sehr selten notwendig ist, sind hier gegenüber heutigen Lösungen (Anordnung im Kofferraum) nur Vorteile zu erwarten. Diese resultieren insbesondere aus der räumlichen Nähe zur Armaturentafel.

Details der Erfindung ergeben sich aus der folgenden Beschreibung eines Ausführungsbeispiels. Von den zugehörigen Zeichnungen zeigt:
- Fig. 1:: einen Ausschnitt eines Fahrgastraumes eines Fahrzeugs in schematischer Darstellungsweise;
- Fig. 2:: eine Abdeckkappe des Sicherungskastens nach Fig. 1.

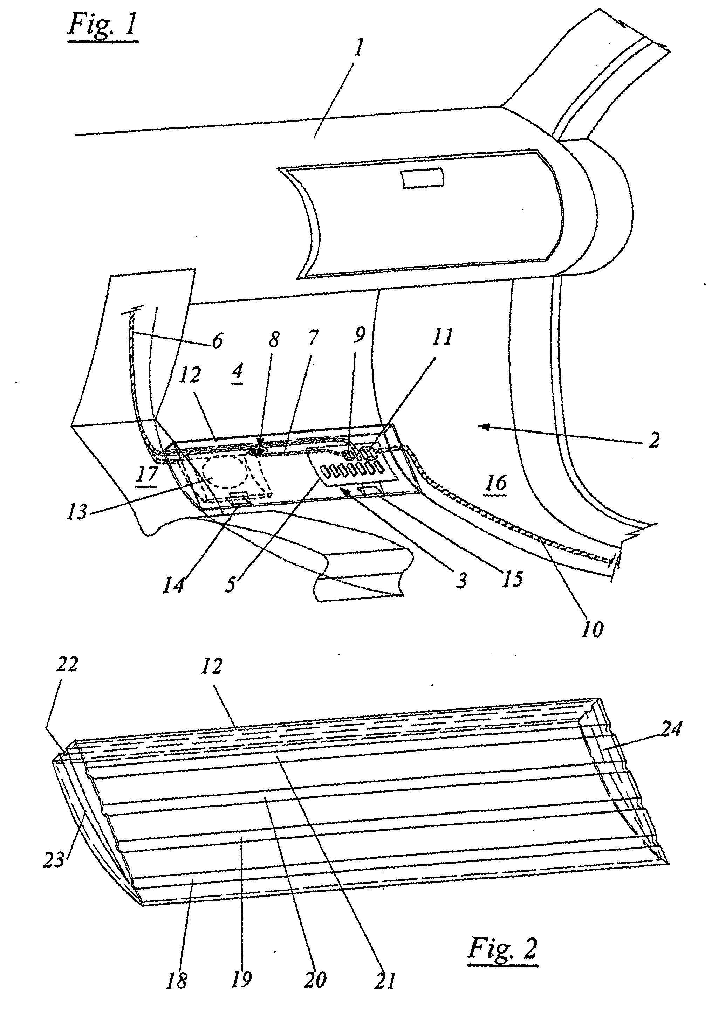

In Fig. 1 ist der für einen Beifahrer vorgesehene Teil des Fahrzeuginnenraumes dargestellt, wobei zur Erreichung einer besseren Übersichtlichkeit auf die Darstellung eines Sitzes verzichtet wurde. Unterhalb einer Armaturentafel 1 ist im Beifahrerfußraum 2 ein Sicherungskasten 3 angeordnet. Er befindet sich unmittelbar in einer Trennwand 4 zwischen einem Motor- und dem Fahrgastraum und wird teilweise von der Trennwand 4 begrenzt. Ein Sicherungs-, Stecker- und Relais-Träger 5 ist direkt an der Trennwand 4 befestigt. Der Träger 5 ist Teil eines Kabelsatzes 6 (Kabelsatzmodul) und wird gemeinsam mit diesem im Fahrzeug montiert. Danach wird ein Motorkabelsatz 7 durch eine Öffnung 8 der Trennwand 4 hindurchgeführt und mittels Steckverbindern 9 kontaktiert. Die Öffnung 8 wird durch eine Gummimanschette abgedichtet. Ein weiterer Kabelsatz 10 wird durch einen Steckverbinder 11 an den Träger 5 (und damit die Fahrzeugelektrik) angeschlossen.

Unterhalb einer Abdeckkappe 12 des Sicherungskastens 3 ist des weiteren ein CD-Abspielgerät 13 eines Navigationssystems angeordnet.

Die Abdeckkappe 12 ist über zwei Scharniere 14, 15 an der Trennwand 4 gelagert, so daß sie in Richtung Beifahrersitz aufklappbar ist, womit Sicherungen und CD-Abspielgerät 13 erreichbar sind. Sie kann durch Rastnasen in ihrer geschlossenen Position gehalten werden.

Die in Fig. 2 genauer dargestellte Abdeckkappe 12 reicht vom Fahrzeugrahmen 16 (rechts) bis zu einem Mitteltunnel 17 (links) des Fahrzeugs. Sie ist in Leichtbauweise, aber in Fahrzeugquerrichtung sehr stabil ausgeführt. Dies wird insbesondere durch Quersicken 18 bis 22 in der Oberfläche der Abdeckkappe 12 erreicht. Wirken jedoch auf die Abdeckkappe 12 Kräfte in Fahrtrichtung, deformiert sich diese Kappe 12 in definierter Weise, wozu ebenfalls die Sicken 18 bis 22 und zusätzlich seitlich angeordnete Sicken 23, 24 beitragen. Somit kann das Risiko von Verletzungen der Beine bei Unfällen für den Beifahrer vermindert werden.

Die Abdeckkappe kann als Teil einer Fußmatte im Fahrzeug montiert werden, oder aber als sichtbares Designelement (Aluminium-Look) genutzt werden.

## Patentansprüche

1. Kraftfahrzeug mit einem von einem Fahrgastraum aus zugänglichen Sicherungskasten (3), welcher elektrisch verbunden ist mit Fahrzeugkomponenten in einem Motorraum sowie im Fahrgastraum, **dadurch gekennzeichnet, daß** der Sicherungskasten (3) im Bereich eines Fußraumes (2) eines Beifahrers an einem Bodenblech (4) angeordnet und sein Gehäuse als Beifahrer-Fußstütze ausgebildet ist.

2. Kraftfahrzeug nach Anspruch 1, **dadurch gekennzeichnet, daß** das Bodenblech (4) als Haltebasis für die elektrischen Komponenten des Sicherungskasten (3) dient und eine Abdeckkappe (12) zum Verschluß dieser elektrischen Komponenten lösbar mit dem Bodenblech (4) verbindbar ist.

3. Kraftfahrzeug nach Anspruch 2, **dadurch gekennzeichnet, daß** die Abdeckkappe (12) in Leichtbauweise als Beifahrer-Fußstütze, ausgebildet ist.

4. Kraftfahrzeug nach Anspruch 2 oder 3, **dadurch gekennzeichnet, daß** an der Abdeckkappe (12) eine Fußmatte zu befestigen ist.

5. Kraftfahrzeug nach einem der Ansprüche 2 bis 4, **dadurch gekennzeichnet, daß** die Abdeckkappe (12) in Fahrzeugquerrichtung zur Verringerung von Deformationen bei einem Seitencrash stabil und in Fahrtrichtung zur Verringerung des Risikos von Fußverletzungen deformierbar ausgebildet ist.

6. Kraftfahrzeug nach einem der Ansprüche 2 bis 5, **dadurch gekennzeichnet, daß** die Abdeckkappe (12) scharnierartig an dem Bodenblech (4) des Fahrzeugs befestigt und zur Erreichung von Sicherungen aufklappbar ist.

7. Kraftfahrzeug nach einem der Ansprüche 1 bis 6, **dadurch gekennzeichnet, daß** die elektrischen Komponenten des Sicherungskastens (3) Teil eines Fahrgastraum-Kabelsatzmoduls (6) sind.

8. Kraftfahrzeug nach einem der Ansprüche 1 bis 7, **dadurch gekennzeichnet, daß** eine Steckverbindung (9) zwischen den elektrischen Komponenten des Sicherungskastens (3) und den Fahrzeugkomponenten im Motorraum unmittelbar am Bodenblech (4) fahrgastraumseitig vom Sicherungskasten (3) abgedeckt herstellbar ist.

9. Kraftfahrzeug nach einem der Ansprüche 1 bis 8, **dadurch gekennzeichnet, daß** im Sicherungskasten (3) weitere Komponenten (13) der elektrischen Anlage des Fahrzeugs angeordnet sind.

## Claims

1. Motor vehicle with a fuse box (3) which is accessible from a passenger compartment and which is electrically connected to vehicle components in an engine compartment as well as in the passenger compartment, **characterised in that** the fuse box (3) is arranged in the region of a front-seat passenger's footwell (2) on a floor pan (4) and its housing is constructed as a front-seat passenger's footrest.

2. Motor vehicle according to claim 1, **characterised in that** the floor pan (4) serves as a holding base for the electrical components of the fuse box (3), and a cover cap (12) for the closure of these electrical components can be releasably connected to the floor pan (4).

3. Motor vehicle according to claim 2, **characterised in that** the cover cap (12) is constructed in lightweight fashion as a front-seat passenger's footrest.

4. Motor vehicle according to claim 2 or 3, **characterised in that** a foot mat is to be fastened to the cover cap (12).

5. Motor vehicle according to any of claims 2 to 4, **characterised in that** the cover cap (12) is stable in the transverse direction of the vehicle to reduce deformation in a broadside crash and deformable in the direction of travel to reduce the risk of foot injuries.

6. Motor vehicle according to any of claims 2 to 5, **characterised in that** the cover cap (12) is fastened in hinge fashion to the floor pan (4) of the vehicle and can be pivoted open to reach fuses.

7. Motor vehicle according to any of claims 1 to 6, **characterised in that** the electrical components of the fuse box (3) are part of a passenger-compartment cable harness module (6).

8. Motor vehicle according to any of claims 1 to 7, **characterised in that** a socket connection (9) can be made between the electrical components of the fuse box (3) and the vehicle components in the engine compartment directly on the floor pan (4), covered by the fuse box (3) on the passenger compartment side.

9. Motor vehicle according to any of claims 1 to 8, **characterised in that** in the fuse box (3) are arranged further components (13) of the electrical system of the vehicle.

## Revendications

1. Véhicule automobile avec une boîte à fusibles (3), accessible depuis l'habitacle, la boîte à fusibles étant reliée électriquement à des composants du véhicule, dans un compartiment moteur ainsi que dans l'habitacle, **caractérisé en ce que** la boîte à fusibles (3) est disposée dans la zone d'un espace des pieds (2) d'un passager, sur une tôle de plancher (4), et son boîtier est réalisé sous la forme de repose-pieds de passager.

2. Véhicule automobile selon la revendication 1, **caractérisé en ce que** la tôle de plancher (4) sert de base de maintien pour les composants électriques de la boîte à fusibles (3) et un capuchon de recouvrement (12), devant fermer ces composants électriques, est susceptible d'être relié de façon désolidarisable à la tôle de plancher (4).

3. Véhicule automobile selon la revendication 2, **caractérisé en ce que** le capuchon de recouvrement (12) est réalisé en construction de faible poids, sous forme de repose-pieds de passager.

4. Véhicule automobile selon la revendication 2 ou 3, **caractérisé en ce qu'**un tapis de pieds doit être fixé sur le capuchon de revêtement (12).

5. Véhicule automobile selon l'une des revendications 2 à 4, **caractérisé en ce que** le capuchon de recouvrement (12) est réalisé en étant stable en direction transversale du véhicule, dans le but de diminuer la déformation en cas de collision latérale, et déformable dans la direction de roulage, dans le but de diminuer le risque de blessure des pieds.

6. Véhicule automobile selon l'une des revendications 2 à 5, **caractérisé en ce que** le capuchon de recouvrement (12) est fixé à la façon d'une charnière sur la tôle de plancher (4) du véhicule et est ouvrable par rabattement, dans le but d'atteindre les fusibles.

7. Véhicule automobile selon l'une des revendications 1 à 6, **caractérisé en ce que** les composants électriques de la boîte à fusibles (3) font partie d'un module de harnais de câbles d'habitacle (6).

8. Véhicule automobile selon l'une des revendications 1 à 7, **caractérisé en ce qu'**une liaison à embrochage (9) est susceptible d'être établie entre les composants électriques de la boîte à fusibles (3) et les composants de véhicule situés dans le compartiment moteur, directement sur la tôle de plancher (4), en étant couvert, côté habitacle, par la boîte à fusibles (3).

9. Véhicule automobile selon l'une des revendications 1 à 8, **caractérisé en ce que** d'autres composants (13) de l'installation électrique du véhicule sont disposés dans la boîte à fusibles (3).
